# EUROPEAN PATENT APPLICATION

(11) **EP 4 174 699 A1**
(43) Date of publication of application: **03.05.2023**
(21) Application number: 21205873.9
(22) Date of filing: 02.11.2021
(51) Int. Cl.: G06F 21/60, G06F 21/64, H04L 67/10

(54) **ACCESS MANAGEMENT SYSTEM FOR MANAGING ACCESS TO RESOURCES**

(71) Applicant: Nagravision Sàrl, 1033 Cheseaux-sur-Lausanne (CH)
(72) Inventor: AVIOLAT, Romain, 1033 Cheseaux-sur-Lausanne (CH)
(74) Representative: Poindron, Cyrille

(57) **Abstract**

The access to resources (200ᵢ) is provided by resource managers (300i) exposing APIs in a distributed computing environment. The system (100) includes a database (110) storing resource type elements (120) describing resources, permission type elements (130) describing permissions related to said resources, and user type elements (150) describing users, each user type element (150) being assigned to at least one permission. The system has an access manager (170) including a processor (171), and, for each resource (200i), a resource provisioning software component (172i) that executes a resource provisioning task with the corresponding resource manager (300i), by using APIs, to check and ensure a consistency between expected permissions on said resource assigned to users in the database, and permissions on said resource configured with the resource manager (300i). A workflow automation software component (173) automatically executes a workflow including the execution of each of the resource provisioning software components (172i).

## Description

### TECHNICAL FIELD

The present disclosure relates to the field of access management for managing access by users to resources such as IT (computer) resources (e.g., services, applications (software), data, devices, systems, infrastructure, etc.), or places, access to the resources being provided by a plurality of resource access providers in a distributed computing environment. Such a system can be used for example in an enterprise to ensure that the right users have appropriate access for various resources they need to work.

### BACKGROUND

In IT (information technology) security, the identity and access management (IAM) refers to processes for first registering and authorizing access rights in a configuration phase, and then, in an operation phase, for identifying, authenticating and controlling users to have access to resources, typically applications, services, systems, networks and/or places, based on the previously authorized access rights.

Today, many organizations are increasingly using resources delivered in a distributed computing environment. For example, an enterprise can use applications delivered by SaaS (Software as a service) providers over the Internet as services. Instead of installing and maintaining software on a large number of user computers, the users access the software via the Internet. Such an approach simplifies software and hardware management. The services can be delivered by service providers external to the enterprise, or by systems of an internal network of the enterprise. A worker may need to connect to a large number of service providers or systems to work.

In an onboarding process of a newly hired person in an enterprise or organization, it is needed to configure the permissions or access rights of the person for different resources. This task is usually executed manually by an administrator with each service or resource provider. The process of registering and configuring the user access rights (permissions) varies depending on the service provider. When the employee leaves the enterprise, it is also required to suppress all his access rights with the service providers, which is usually done manually by the administrator in an offboarding process. However, the offboarding process often causes inconsistency, for example when the onboarding task was not properly performed or one or more services to which the employee had access is not part of an offboarding list of services.

Therefore, there is a need for improving the access management for managing access to resources delivered by resource managers in a distributed computing environment.

### SUMMARY

The present disclosure concerns an access management system for managing access to resources, the access to said resources being provided by a plurality of resource managers in a distributed computing environment, each resource manager exposing application programming interfaces, or APIs, the system including
- a database storing elements of different types including resource type elements describing resources, permission type elements describing permissions related to said resources, and user type elements describing users, each user type element being assigned to at least one permission, and
- an access manager including
   a processor;
   for each resource listed in the database, a resource provisioning software component running on the processor and responsible for executing a resource provisioning task with the corresponding resource manager, by using APIs exposed by said resource manager, said resource provisioning task including a set of actions to check and ensure a consistency between expected permissions on said resource assigned to users in the database, and permissions on said resource configured with the resource manager; and a workflow automation software component running on the processor and responsible for automatically executing a workflow including the execution of each of the resource provisioning software components related to the resources listed in the database.

In the present disclosure, each resource provisioning software component corresponds to one resource, for example one service. It is proper to the resource as it uses the specific APIs implemented by said resource. Each resource provisioning software component is operable for provisioning or configuring the corresponding resource to ensure the consistency between the database and the resource. The database centrally registers (describes) who is authorized to access to what. Based on the information stored in the database, each resource is automatically provisioned or configured by the corresponding resource provisioning software component running on the processor, each time the workflow is executed. This allows to avoid inconsistency between the database and the resources.

The access management system allows to manage multiple resources permissions at-scale, by having a uniform way to describe the accesses in the database). The resource managers are in charge of translating those resources permissions in a language that the resource can understand.

The database can further store user profile type elements, each user profile type element defining one or more permissions, and at least part of the user type elements are assigned to one or more user profiles.

The use of user profile allows to simplify the assignation of permissions or rights on resources to users.

In an embodiment, when a user type element related to a new user, assigned to at least one permission related to a given resource, is added in the database, the corresponding resource provisioning software component configures said at least one permission related to the given resource for said new user with the resource manager of the given resource, the next time the workflow is executed. For example, during an onboarding process, a new user can be added in the database and, automatically, the next time the workflow is executed, the resources on which the new user has permissions are correctly provisioned based on the database.

In an embodiment, when a user type element, assigned to one or more permissions related to given resources, is deleted from the database, each corresponding resource provisioning software component deletes the configured permission with the resource manager, the next time the workflow is executed. For example, during an offboarding process, a user can be deleted from the database and, automatically, the next time the workflow is executed, the resources on which the user had permissions are correctly configured to no longer authorize access to the user.

In an embodiment, in the database, each element includes information describing said element based on a data structure that is specific to the type of the element and comprises a predefined list of description objects.

The workflow automation software component can be operable for periodically executing the workflow. For example, the workflow can be automatically executed each day, which allows to frequently update the configurations of all resources listed in the database, based on the information stored in the database.

In an embodiment, the access management system further includes a ticketing system having an operator interface through which an operator performs an action from the group including adding, deleting, and modifying a user type element in the database, and operable for generating a ticket for the action performed; and
a database management system operable for automatically updating the database based on the generated ticket.

In that case, the workflow automation software component can execute the workflow each time the database has been updated, for example each time a ticket is generated. Thus, each update of the database (e.g., by adding, modifying, or deleting a user type element) triggers the automatic execution of the workflow and the resource provisioning software components of all resources listed in the database are executed. This allows to avoid any inconsistency between the database and the resources, without any delay.

In an embodiment, the access management system can further include a visualization system operable for generating representations of relations between elements of the database, via a graphical user interface.

The present disclosure further includes a computer-implemented method for managing access to resources, the access to said resources being provided by a plurality of resource managers in a distributed computing environment, each resource manager exposing application programming interfaces, or APIs, the method including the following steps:
- by a database management system, storing in a database elements of different types including resource type elements describing resources, permission type elements describing permissions related to said resources, and user type elements describing users, each user type element being assigned to at least one permission, and
- by an access manager, automatically executing a workflow including, for each resource listed in the database, the execution of a resource provisioning task with the corresponding resource manager, by running a corresponding resource provisioning software component on a processor and using APIs exposed by said resource manager, said resource provisioning task including a set of actions to check and ensure a consistency between expected permissions on said resource assigned to users in the database and permissions on said resource configured with the resource manager.

In an embodiment, when a user type element related to a new user, assigned to at least one permission related to a given resource, is added in the database, the corresponding resource provisioning software component configures said at least one permission related to the given resource for said new user with the resource manager of the given resource, the next time the workflow is executed.

In an embodiment, when a user type element, assigned to one or more permissions related to given resources, is deleted from the database, each corresponding resource provisioning software component deletes the permission configured with the resource manager, the next time the workflow is executed.

The workflow can be periodically executed.

In an embodiment, the computer-implemented method further includes the steps of
- by a ticketing system, performing an action from the group including adding, deleting, and modifying a user type element in the database, through an operator interface of said ticketing system, and generating a ticket for the action performed; and
- by the database management system, automatically updating the database based on the generated ticket.

The workflow can be executed each time the database has been updated, for example each time a ticket is generated.

### BRIEF DESCRIPTION OF THE DRAWINGS

Other features, purposes and advantages of the disclosure will become more explicit by means of reading the detailed statement of the non-restrictive embodiments made with reference to the accompanying drawings.

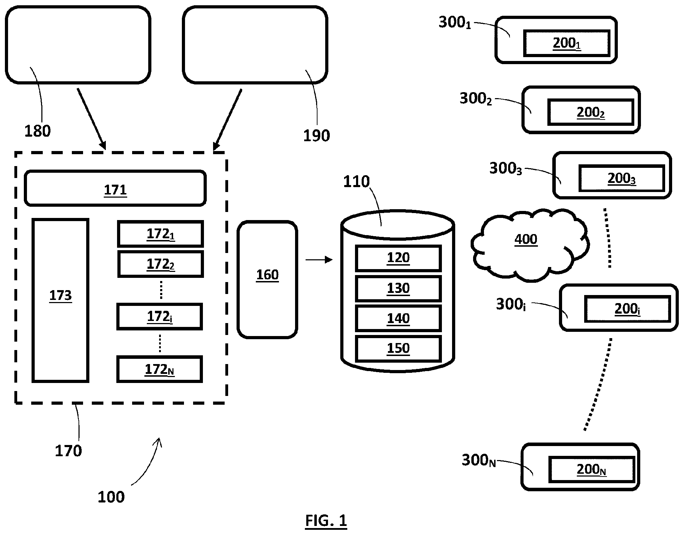

Figure 1 shows a global identity and access management system, according to an embodiment.
Figure 2 shows an example of a service type element, according to an embodiment.
Figure 3 shows an example of a permission type element, according to an embodiment.
Figure 4 shows an example of a user profile type element, according to an embodiment.
Figure 5 shows an example of a user type element, according to an embodiment.
Figure 6 illustrates the relationship between different types of elements of a database of the access management system, in an embodiment.
Figure 7 shows an organigram of a computer-implemented method for access management, according to an embodiment.
Figure 8 shows an organigram of a task of provisioning a given resource, according to an embodiment.

### DETAILED DESCRIPTION

The present disclosure concerns an access management system 100 for managing access to a plurality of resources 200ᵢ, with 1 ≤ *i* ≤ *N*, by users.

The resources 200ᵢ can include services, devices, network equipment, servers, portals, content (data), applications (software), products, places (e.g., rooms, building, etc.) and/or any other asset for which access is controlled by a computer-implemented system or device.

The resources 200ᵢ are managed by resource managers 300i. A resource manager 300i is a computer-implemented system (e.g., platform, server, device, etc.) that is responsible for controlling access to a resource 200ᵢ and for managing permissions on the resource 200ᵢ for users (in other words: what actions each user can perform on the resource). The resource manager 300i can be a Software as a Service (SaaS) provider delivering software, or application(s), as a service. In an embodiment, some resource managers 300i can manage a plurality of resources.

The resource managers 300i are realized by a plurality of systems or entities forming a distributed system. The resource managers 300i are connected to a communication network 400, such as the Internet or a local network. Each resource manager 300i exposes (in other words: implements) specific application programming interfaces (or APIs), proper to said resource manager 300ᵢ, that are available to other systems to enable them to communicate with the resource manager 300i through a network 400 (e.g., the Internet and/or a local network), and perform different actions for configuring and/or managing access to the corresponding resource(s) 200ᵢ. The actions can include registering user, assigning access rights to the user and/or setting permissions defining what actions the user can perform on the resource(s), deleting a registered user, user access rights and/or user permissions.

The access management system 100 has the role of managing access by users to the plurality of resources 200ᵢ delivered by the plurality of resource managers 300i in a distributed computing environment. The access management system 100 includes a database 110, a database management system 160 and an access manager 170.

The database 110 stores elements of different types. In an embodiment, the database 100 stores:
- resource type elements 120, each resource type element describing one resource;
- permission type elements 130, each permission type element describing permission(s) related to one resource (in other words: what actions a user can perform on said resource),
- user profile type elements 140, each user profile type element defining one or more permissions, and
- user type elements 150 describing users, each user type element being assigned to one or more user profiles and/or one or more permissions.

The user profile type elements are optional. The database 110 could store only permission type elements 130 (without user profile type elements).

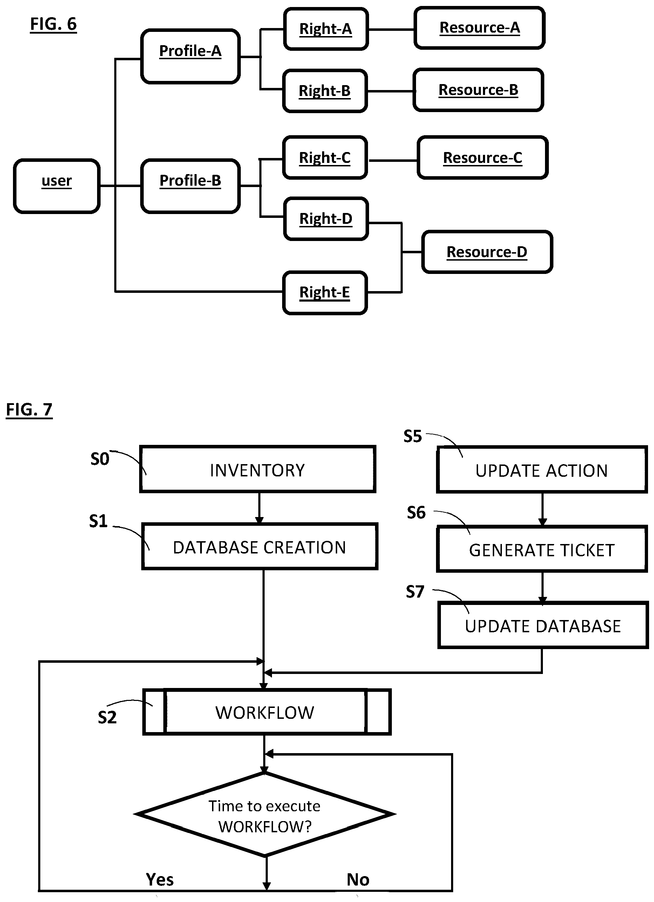

Figure 6 shows an illustrative example of relations between the different types of elements 120, 130, 140, 150, more precisely between one users, user profiles (Profile-A, Profile-B), permissions or rights (right-A to right-E) and resources (resource-A to resource-D). A user profile can include one permission on a given resource or a plurality of permissions on a given list of resources. The content of the database 110 defines the relations between the different stored elements. For example, a user profile "analyst, Europe, level 3" is assigned to a determined list of permissions on given resources. A user that is assigned to a user profile has access to all resources of this user profile. A user can be assigned to one or more user profiles. For example, a user that is a developer and a team-leader can be assigned to a user-profile A of developer and a user-profile B of human resources manager. A user can also be directly assigned to one or more permissions (rights).

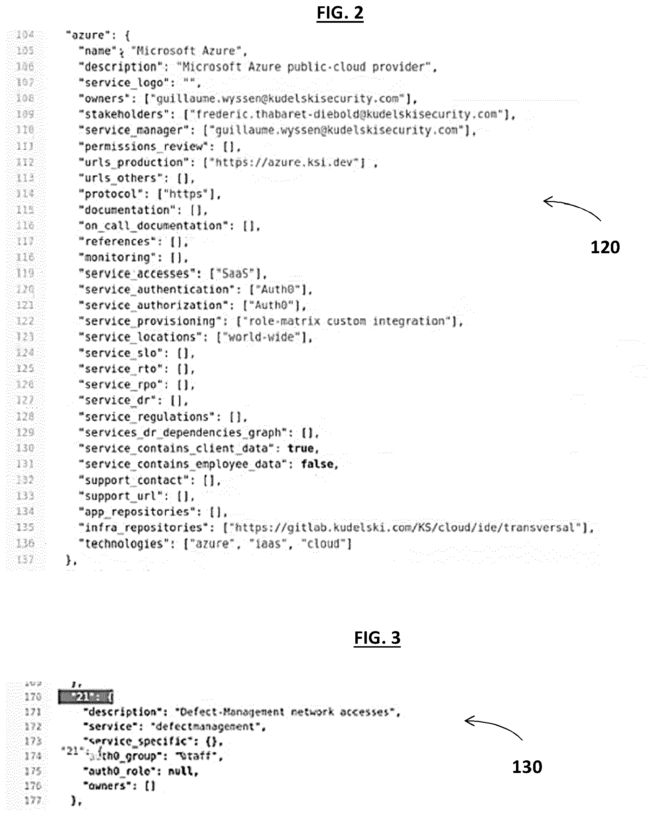

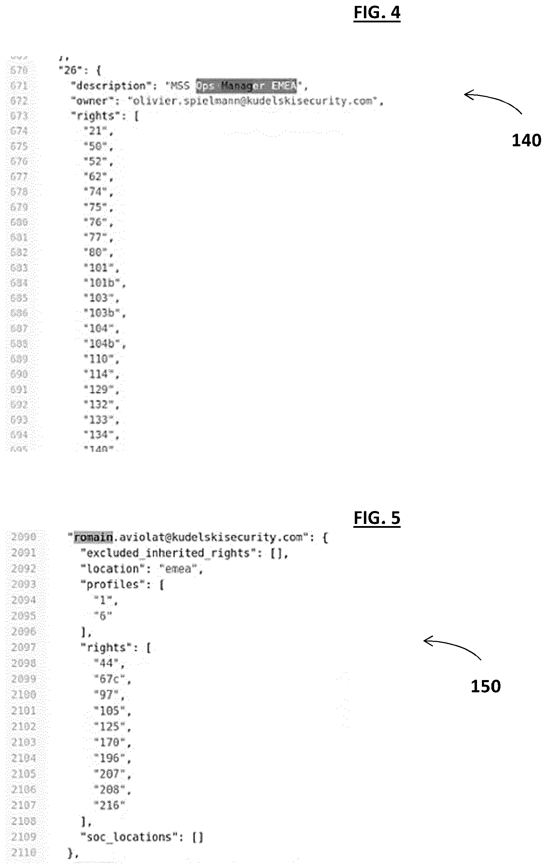

In the database 110, each element 120, 130, 140 and 150 includes information describing the element based on a data structure that is fixed and specific to the type of the element. Thus, in the embodiment, four types of data structures are used to create the resource type elements, the permission type elements, the user profile type elements and the user type elements. Each data structure comprises a predefined set of description objects. Figures 2, 3, 4 and 5 illustrate examples of a service (as a resource) type element 120, a permission type element 130, a user profile type element 140 and a user type element 150. In each element 120, 130, 140 or 150 stored in the database 110, at least part of the description objects are filled in with descriptive information for describing the element. Some description objects can remain unfilled if they are not necessary to describe the element.

Figures 2, 3, 4 and 5 respectively show examples of:
- a service (resource) type element 120, describing a specific service based on a predefined service type data structure,
- a permission type element 130 describing a permission related to a specific service,
- a user profile type element 140 describing one user profile,
- a user type element 150 describing one user.

In the figures 2 to 5, for each type of element, the description objects of the corresponding data structure are listed on the left and the descriptive information is added on the right or just below (for at least part of the description objects).

The access manager 170 has the role of managing access to the resources 200ᵢ by users based on the database 110. More precisely, the access manager 170 is operable for reading the information in the database 110 to determine which resource(s) each user is expected to access and the expected user's permissions, and to automatically configure the corresponding resource managers according to what is stored in the database 110 to grant access to users as defined in the database 110, according to the stored user permissions, as will be explained more precisely later.

The access manager 170 has a processor 171 and, for each resource 200ᵢ listed in the database 110 (by a corresponding resource type element 120), a resource provisioning (or configuration) component 172ᵢ responsible for executing a task of provisioning (or configuring) the resource 200ᵢ with the corresponding resource manager 300i, by using APIs provided (exposed) by said resource manager 300i, so as to ensure a consistency between expected permissions related to the resource 200ᵢ assigned to users in the database 110, and permissions configured with the resource manager 300i. Each resource provisioning component 172ᵢ is a software component (in other words: a computer program or part of a computer program) that can run on the processor 171. It can be a provisioning script. When the resource provisioning component 172ᵢ is executed by the processor 171, it causes the execution of a process of checking consistency between expected permissions related to said resource 200ᵢ assigned to users in the database 110, and permissions configured for the resource 200ᵢ with the corresponding resource manager 300i, and, in case of inconsistency, configuring the resource 200ᵢ with the resource manager 300i.

The access manager 170 also comprises a workflow automation software component 173 (in other words: a computer program) that can run on the processor 171 and is operable for automatically executing a workflow including the execution of each one of the configuration or provisioning software components 172ᵢ related to all resources 200ᵢ listed in the database 110. In an embodiment, the workflow (in other words: the execution of each of the configuration or provisioning software component 172ᵢ) is executed periodically, for example once per day. In addition, the workflow can be executed automatically each time the database 110 is updated (modified), as will be explained later.

The database management system 160 is responsible for managing the database 110 by adding, modifying and/or deleting elements (resource type elements, permission type elements, user profile type elements and/or user type elements) in the database 110.

In an embodiment, the access management system 100 further includes a ticketing system 180 responsible for updating the database 110 under control of an operator (a person). The ticketing system 180 has an operator interface through which an operator can perform different actions for updating the database 110, for example actions from the group including adding, deleting, and modifying a user type element in the database 110. In operation, for each update action performed by an operator, the ticketing system 180 generates a ticket related to the action performed. Then, the database management system 160 automatically updates the database 110 based on the generated ticket.

Optionally, the access management system 100 also comprises a visualization system 190 responsible for generating representations of relations between elements stored in the database 110, via a graphical user interface.

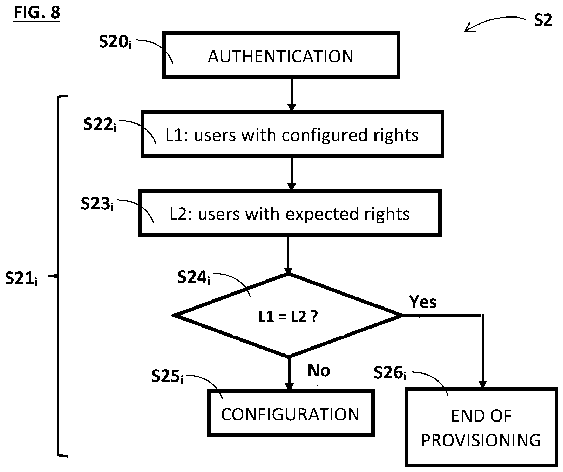

A computer-implemented method for managing access to the resources 200ᵢ will now be described according to an embodiment and is illustrated in figures 7 and 8.

Let's consider an illustrative example of an organization having a plurality of workers, that will be termed as users, that need to access different resources 200ᵢ delivered by a plurality of resource managers 300i and have certain permissions on the resources 200ᵢ.

In a preliminary phase, an inventory of resources 200ᵢ required for the users within the organization, required permissions on the resources 200ᵢ, user-profiles within the organization and users within the organization, can be taken, in a step S0. Then, in a database creation step S1, resource type elements, permission type elements, user-profile type elements and user type elements are created, based on the result of the inventory, and stored in a database 110, under control of the database management system 160. The action of initially taking the inventory, creating, and storing all the elements in the database 110 can be performed under control of an operator, by using the ticketing system 180 or directly with an appropriate operator interface.

Then, periodically, for example once per day at a programmed time (but it can be more or less frequently), a workflow is automatically executed in a step S2 under control of the access manager 170, by running the workflow automation software component 173 on the processor 171, to check the consistency between the database 110 and the resources listed in the database 110.

The workflow includes a step S2 of resource provisioning to check the consistency between the database 110 and all the resources 200ᵢ listed in the database 110 and, if needed, configure one or more resources 200ᵢ as expected based on the database 110. The resource provisioning step S2 is divided into a plurality of resource provisioning (or configuration) tasks S21ᵢ. For each resource 200ᵢ listed in the database 110, there is one resource provisioning task S21ᵢ that is executed for that resource 200ᵢ and includes a set of appropriate actions to check and ensure a consistency between the expected permissions on said resource 200ᵢ, assigned to users in the database 110, and the permissions on said resource 200ᵢ configured with the corresponding resource manager 300i for users listed in the database 110. Each resource provisioning task S21ᵢ for a given resource 200ᵢ is implemented by one corresponding resource provisioning software component 172ᵢ running on the processor 171 and using APIs exposed by the corresponding resource manager 300i. In an embodiment, the resource provisioning (configuration) tasks S21₁, S21₂, ..., S21ᵢ, ... related to all resources 200ᵢ listed in the database 110 are sequentially executed in the workflow S2. In another embodiment, some tasks S21ᵢ could be performed in parallel.

The resource provisioning task S21ᵢ related to each resource 200ᵢ is executed as described below and illustrated in figure 8, in an embodiment.

In a step S22ᵢ, the resource provisioning component 172ᵢ makes an API call so that an API of the resource 200ᵢ lists all users having access to the resource 200ᵢ and the corresponding permissions on the resource 200ᵢ for users. The result is a first list L1 of users associated with respective permissions configured with the resource manager 300i. In addition, in a step S23ᵢ, the resource provisioning component 172ᵢ searches the database 110 to determine the users assigned to expected permissions on the resource 200ᵢ in the database 110. The result is a second list L2 of users respectively associated with expected permissions on the resource 200ᵢ. Then, the resource provisioning software component 172ᵢ compares the two lists of users L1, L2 and checks the consistency between the two lists L1, L2, in a step S24ᵢ.

When there is an inconsistency between the two lists L1, L2 in the step S24ᵢ (in other words: the two lists L1, L2 are not the same, branch "No" in figure 8), the resource provisioning component 172ᵢ performs an action of configuring or provisioning the resource 200ᵢ with the resource manager 300i, based on what is expected in the database 110 (in other words: based on the expected permissions in the database 110), in a step S25ᵢ. The result of this configuration is that the expected permissions on the resource 200ᵢ for users (as stored in the database 110) are correctly configured with the resource manager 300i of the resource 200ᵢ. The configuration can include at least one of the actions including registering a new user, configuring a permission on the resource 200ᵢ for a user (e.g., by adding a permission for a user, or by modifying an existing permission for a user), deleting a user and/or deleting a permission for a user.

When a user type element related to a new user, assigned to at least one permission related to a given resource 200ᵢ, is added in the database 110 (for example, during an onboarding process), the corresponding resource provisioning software component 172ᵢ configures said at least one permission related to the given resource 200ᵢ for the new user with the corresponding resource manager 300i, the next time the workflow is executed.

When a user type element, assigned to one or more permissions related to given resource(s) 200ᵢ, is deleted from the database 110 (for example during an offboarding process), each corresponding resource provisioning software component 172ᵢ deletes the configured permission with the corresponding resource manager 300i, the next time the workflow is executed.

When there is no inconsistency between the two lists L1, L2 in the step S24ᵢ, the process of configuring the resource 200ᵢ goes to an end step S26ᵢ.

In an embodiment, each resource provisioning component 172ᵢ authenticates with the appropriate resource manager 300i, in a step S20i, before executing the resource provisioning task. For that purpose, when the resource 200ᵢ is initially listed (registered) in the database 110 and the resource provisioning software component 172ᵢ is generated, an authentication secret key, shared by the access manager 170 and the corresponding resource manager 300i, is generated.

After creation of the database 110, the ticketing system 180 can be used to perform any updating action from the group including adding, deleting, and modifying a user type element in the database 110, in a step S5. These actions can be performed by an operator, through the operator interface of the ticketing system 180. For each update action performed by the operator, a corresponding ticket including information related to the update action is generated, in a step S6. The generated ticket is then transmitted by the ticketing system 180 to the database management system 160 that automatically updates the database 110 based on the information in the ticket, in a step S7. For example, when the ticket includes information for adding a new user in the database 110, a user type element describing the new user is generated and added in the database 110 by the database management system 160. And, conversely, when the ticket includes information for deleting a user in the database 110, the user type element describing the user is deleted from the database 110 by the database management system 160.

In an embodiment, after each update of the database 110, the workflow S2 can be automatically executed by the access manager 170. For example, the workflow S2 can be executed each time a ticket is generated and the database 110 has been updated.

In an embodiment, when a user wants to access and/or use a resource with a user device, the user device connects to the resource through a communication network and is redirected to an identity provider for authentication. The user device authenticates with the identity provider and, after authentication, the user device obtains credentials. Then, the user device authenticates with the resource (or resource manager) by using the obtained credentials.

Any other authentication method could be used to access the resources.

## Claims

1. An access management system (100) for managing access to resources (200ᵢ), the access to said resources (200ᵢ) being provided by a plurality of resource managers (300ᵢ) in a distributed computing environment, each resource manager (300ᵢ) exposing application programming interfaces, or APIs, the system (100) including
- a database (110) storing elements of different types including resource type elements (120) describing resources, permission type elements (130) describing permissions related to said resources, and user type elements (150) describing users, each user type element (150) being assigned to at least one permission, and
- an access manager (170) including
a processor (171);
for each resource (200ᵢ) listed in the database (110), a resource provisioning software component (172ᵢ) running on the processor (170) and responsible for executing a resource provisioning task with the corresponding resource manager (300ᵢ), by using APIs exposed by said resource manager (300ᵢ), said resource provisioning task including a set of actions to check and ensure a consistency between expected permissions on said resource assigned to users in the database, and permissions on said resource configured with the resource manager (300ᵢ); and
a workflow automation software component (173) running on the processor and responsible for automatically executing a workflow including the execution of each of the resource provisioning software components (172ᵢ) related to the resources (200ᵢ) listed in the database (110).

2. The system according to claim 1, wherein the database (110) further stores user profile type elements (140), each user profile type element (140) defining one or more permissions, and at least part of the user type elements (150) are assigned to one or more user profiles.

3. The system according to claim 1 or 2, wherein, when a user type element (150) related to a new user, assigned to at least one permission related to a given resource (200ᵢ), is added in the database (110), the corresponding resource provisioning software component (172ᵢ) configures said at least one permission related to the given resource (200ᵢ) for said new user with the resource manager (300ᵢ) of the given resource (200ᵢ), the next time the workflow is executed.

4. The system according to any of claims 1 to 3, wherein, when a user type element (150), assigned to one or more permissions related to given resources (200ᵢ), is deleted from the database (110), each corresponding resource provisioning software component (172ᵢ) deletes the configured permission with the resource manager (300ᵢ), the next time the workflow is executed.

5. The system according to any of claims 1 to 4, wherein, in the database (110), each element (120, 130, 140, 150) includes information describing said element based on a data structure that is specific to the type of the element and comprises a predefined list of description objects.

6. The system according to any of claims 1 to 5, wherein the workflow automation software component (173) is operable for periodically executing the workflow.

7. The system according to any of claims 1 to 6, further including a ticketing system (180) having an operator interface through which an operator performs an action from the group including adding, deleting, and modifying a user type element (150) in the database (110), and operable for generating a ticket for the action performed; and
a database management system (160) operable for automatically updating the database (110) based on the generated ticket.

8. The system according to any of claims 1 to 7, wherein the workflow automation software component (173) is operable for executing the workflow each time the database (110) has been updated.

9. The system according to any of claims 1 to 8, further including a visualization system (190) operable for generating representations of relations between elements of the database (110), via a graphical user interface.

10. A computer-implemented method for managing access to resources (200ᵢ), the access to said resources (200ᵢ) being provided by a plurality of resource managers (300ᵢ) in a distributed computing environment, each resource manager (300ᵢ) exposing application programming interfaces, or APIs, the method including the following steps:
- by a database management system (160), storing (S0, S1) in a database (110) elements of different types including resource type elements (120) describing resources, permission type elements (130) describing permissions related to said resources, and user type elements (150) describing users, each user type element (150) being assigned to at least one permission, and
- by an access manager (170), automatically executing (S2) a workflow including, for each resource listed in the database (110), the execution of a resource provisioning task with the corresponding resource manager (300ᵢ), by running a corresponding resource provisioning software component (172ᵢ) on a processor (170) and using APIs exposed by said resource manager (300ᵢ), said resource provisioning task including a set of actions to check and ensure a consistency between expected permissions on said resource assigned to users in the database (110) and permissions on said resource (200ᵢ) configured with the resource manager (300ᵢ).

11. The computer-implemented method according to claim 10, wherein, when a user type element (150) related to a new user, assigned to at least one permission related to a given resource (200ᵢ), is added in the database (110), the corresponding resource provisioning software component (172ᵢ) configures said at least one permission related to the given resource for said new user with the resource manager (300ᵢ) of the given resource (200ᵢ), the next time the workflow is executed.

12. The computer-implemented method according to any of claims 10 and 11, wherein, when a user type element (150), assigned to one or more permissions related to given resources (200ᵢ), is deleted from the database (110), each corresponding resource provisioning software component (172ᵢ) deletes the permission configured with the resource manager (300ᵢ), the next time the workflow is executed.

13. The computer-implemented method according to any of claims 10 to 12, wherein the workflow is periodically executed.

14. The computer-implemented method according to any of claims 10 to 13, further including the steps of
- by a ticketing system (180), performing (S5) an action from the group including adding, deleting, and modifying a user type element in the database, through an operator interface of said ticketing system, and generating (S6) a ticket for the action performed; and
- by the database management system (160), automatically updating (S7) the database based on the generated ticket.

15. The computer-implemented method according to any of claims 10 to 14, wherein the workflow is executed (S2) each time the database has been updated (S7).
